# EUROPEAN PATENT SPECIFICATION

(11) **EP 2 159 657 B1**
(45) Date of publication and mention of the grant of the patent: **04.10.2017**
(21) Application number: 08162897.6
(22) Date of filing: 25.08.2008
(51) Int. Cl.: B05B 13/04, B25J 9/00, G05B 19/418

(54) **Method and control system for synchronisation of robot and conveyor**
Verfahren und Steuersystem zur Synchronisation eines Roboters und eines Förderbandes
Procédé et système de commande pour la synchronisation d'un robot et d'un convoyeur

(43) Date of publication of application: 03.03.2010
(73) Proprietor: ABB AS, 1396 Billingstad (NO)
(72) Inventor: Søyland, Svein, 4355 Kverneland (NO)
(74) Representative: Savela, Reino Aleksi

(56) References cited:
- WO-A-2005/063454
- GB-A- 2 045 463
- US-A- 4 170 751
- US-A- 4 810 538

## Description

### FIELD OF INVENTION

The present invention relates generally to industrial robots, and more particularly to synchronisation of industrial robots and conveyors, particularly when stoppages occur.

### BACKGROUND

Industrial robots are often used in production when repetitive movements are to be performed quickly and/or accurately. For example robots can be used for spray painting, welding, assembling, pick and place operations, etc. Moreover, industrial robots are often used in conjunction with conveyors. The conveyor then moves the work object along a path, while at the same time, the industrial robot performs tasks related to the work object.

Sometimes the conveyor stops. This can for example be due to problems at another point in the production line, or for some other reason. While the robot typically keeps a coordinate system synchronised with the position of the work object, the stoppage can result in the robot not being able to reach a desired part of the work object, which would have been in reach if the conveyor would have kept on moving. This type of problem is known as a kinematic limitation. Consequently, the programmed tasks can not be performed as planned.

One known way of dealing with kinematic limitations upon conveyor stoppages is to include explicit waiting positions in the movement program for the robot. The placement of these lines is at the discretion of the programmer and the amount of work and time spent on this task may be considerable.

Another attempt at relieving the issued with kinematic limitation is to use halt the program in next point if the conveyor stops and a paint applicator is off. If the paint applicator is on, the program will halt in next point where paint is switched off. Thus, the paint result will be preserved, even if the conveyor has a stop. When the conveyor starts again, the robot program will continue. This feature has the limitation that it will test for the condition mentioned above only at points in the program where the paint is off. Consequently, if the paint applicator happens to be on at each of these points throughout the path, the robot will keep on spraying without halting the program, which would then result in a significant risk of kinematic limitation during long periods of paint application.

US 4170751 presents an industrial robot for spray painting workpieces carried by a conveyor is provided with a control to allow the programmed robot sequence to proceed synchronously with conveyor movement so long as the conveyor maintains a normal speed. When, however, the conveyor stops, the control maintains robot operation until the spray gun is moved to a safe stopping place to avoid excessive paint application to a portion of a workpiece. Upon conveyor start-up, the robot remains stationary until the workpiece approaches normal speed and moves into a position synchronous with the robot position.

WO 2005/063454 discloses a method of controlling a robot that is used in concert with at least one other robot to perform an operation on one or more work objects. If a stoppage occurs ahead of a task that a robot is carrying out, the robot completes the present task but does not proceed to the next task. Since the robot only can wait at the end of a task, the robot may have to continue for significant amount of time before it reaches such a point. This may result in discrepancies between the expected position of the work object and the actual position of the work object on the stopped conveyor. The same problems with kinematic limitations discussed above related to stoppages may thus still occur with the method described in WO 2005/063454.

### SUMMARY OF THE INVENTION

An object of the present invention is to improve control of robots when conveyor stoppages occur.

According to a first aspect of the invention, it is presented a method according to independent claim 1. By dynamically creating the waiting position, it can be created at a position which may be sooner than a pre-programmed waiting position, reducing any disadvantages of the stoppage. Moreover, no waiting positions need to be pre-programmed, which reduces the risk of any mistakes and also reduces the time to prepare for production. The dynamically generation of waiting positions also allows for faster changeovers between different work objects, as the waiting positions do not need to be taught in a teaching run.

The step of effecting the waiting position may involve making the robot stationary.

The step of creating a new waiting position may involve creating a plurality of waiting positions, and the step of effecting the waiting position involves effecting movement of the robot between the waiting positions.

The determining that the speed of the conveyor has deviated from a nominal speed may involve determining that the conveyor has stopped.

The step of effecting the waiting position may include effecting movements of the robot such that a predetermined part of the robot is in a position corresponding to the waiting position, and the step of resuming the control program may include effecting movements of the robot such that the predetermined part of the robot is in same position as prior to the step of effecting the waiting position.

The step of suspending movement may include effecting movements of the robot such that a predetermined part of the robot is in a position corresponding to the waiting position, and the step of resuming the control program may include effecting movements of the robot such that the predetermined part of the robot is in same position as prior to the step of suspending.

The method may further comprise, after the step of determining and before the step of resuming, the step of: suspending paint spraying performed by the robot on the work object. The resuming the control program may involve resuming the paint spraying.

The suspending and resuming the paint spraying may be performed when a paint applicator of the robot has reached some distance from the work object. This allows for a smooth transition from spraying paint to stopping the spraying, and similarly, a smooth transition when the paint spraying is resumed. This solves the problem which may arise if the paint spraying is stopped or resumed abruptly, resulting in undesired, and visible and/or tactile artefacts from the suspended painting.

The method may further comprise the steps of: as a response to the determining that the speed of the conveyor has deviated from the nominal speed, creating a virtual surface; as a response to a predetermined part of the robot passing the virtual surface in a first direction, suspending paint spraying; and as a response to the predetermined part of the robot passing the virtual surface in a second direction, the second direction being opposite to the first direction, resuming the paint spraying.

The determining that the speed of the conveyor has deviated involves determining that an accumulated lag time of the conveyor exceeds a threshold lag time.

A second aspect of the invention is a control system according to independent claim 10. A third aspect of the invention is a robot comprising a control system according to the second aspect.

The robot may be a paint robot.

A fourth aspect of the invention is a computer program product including software code, which, when executed in a controller of a robot, performs the method according to the first aspect.

It is to be noted that whenever the term surface is used herein, it is to be construed as a portion of space having length and breadth but no thickness. Specifically, surface does not need to apply to a physical, material surface.

It is to be noted that any feature of the first, second, third and fourth aspects may, where appropriate, be applied to any other aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF DRAWINGS

The invention is now described, by way of example, with reference to the accompanying drawings, in which:
Fig 1 is a schematic diagram illustrating a top view of an industrial robot according to an embodiment of the present invention,
Fig 2 is a schematic diagram illustrating control program execution of the robot of Fig 1, without any interruptions,
Fig 3 is a schematic diagram illustrating program execution of the robot of Fig 1, where there is an unhandled conveyor stoppage,
Fig 4 is a schematic diagram illustrating program execution of the robot of Fig 1, where there is a conveyor stoppage which is handled,
Fig 5 is a schematic diagram illustrating the path of a program flow of the robot in Fig 1, and
Fig 6 is a schematic diagram illustrating the path of a program flow of the robot in Fig 1 where there is an interruption.

### DETAILED DESCRIPTION OF PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

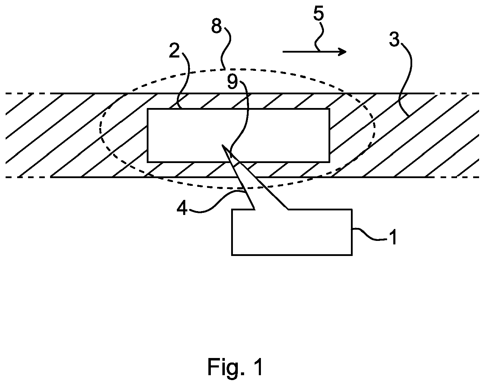

Fig 1 is a schematic diagram illustrating a top view of an industrial robot in an embodiment of the present invention. The industrial robot 1 is positioned in the proximity of a conveyor 3. On the conveyor 3, there is a work object 2. It is to be noted that the work object 2 can consist of one or more distinct parts. The industrial robot 1 can for example be a multi-axis (e.g. six-axis) industrial robot 1. The industrial robot 1 can be used wherever it is desired to perform actions on the work object 2 on a conveyor. Typically, the robot 1 is used wherever repetitive pre-programmed tasks are to be performed quickly and accurately, e.g. for spray painting, welding, assembling, pick and place operations, etc. Appropriate tools 9 can then attached to an arm 4 of the robot 1. The work object 2 can for example be a car body. The arm 4 of the robot is controlled by effecting rotational motion of one or more of the axes of the robot. In this way, the robot 1 can perform tasks on the work object 2 as the work object is moved by the conveyor 3, as indicated by an arrow 5. The robot has a potential work area 9 within which it can reach. The robot can contain a number of Central Processing units, CPUs. One CPU is a main CPU, which is responsible for executing movement programs, also known as control programs. Such a movement program contains a number of position movement instructions, each indicating how the robot should be moved. Additional CPUs are typically used for specific tasks, such as input/output, motion, etc.

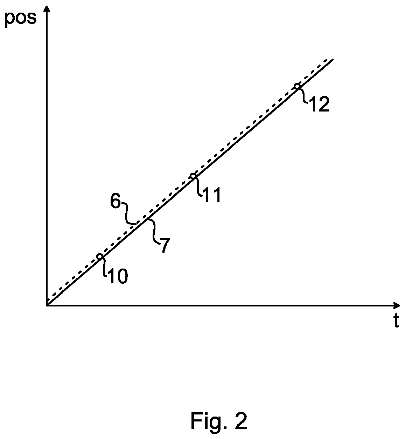

Fig 2 is a schematic diagram illustrating control program execution of the robot of Fig 1, without any interruptions. The horizontal axis represents time and the vertical axis represents the position of the work object 2, actual or estimated.

A linear movement of the work object 2 results in a straight line 7 for the conveyor 3. A dashed line 6 represents the program flow of the control program, in relation to estimated movement of the work object 2. In other words, as far as the control program is aware of, the work object 2 is at the position (vertical coordinate) indicated by the dashed line 6. The control program contains instructions to perform desired tasks on the work object. To perform these desired tasks on the work object 2 in motion on the conveyor 3, the control program effects desired movements and actions of the robot 1, while at the same time being synchronised with the conveyor 3. The controller receives input to indicate the movement of the conveyor, allowing the robot to keep in synch with the movement of the work object 2. The input can for example be pulses representing equidistant points of known lengths of the conveyor. This input can also be used for other purposes to determine the position or speed of the conveyor 3, such as the situations described below. Various points 10, 11, 12 are indicated in the program flow 6.

In the scenario illustrated in Fig 2, there are no interruptions. This is indicated by a continuous increase in position of the solid conveyor line 7 over time. The dashed program flow line 6 follows the conveyor line 7, whereby the robot 1 performs the actions on the moving work object 2 as programmed.

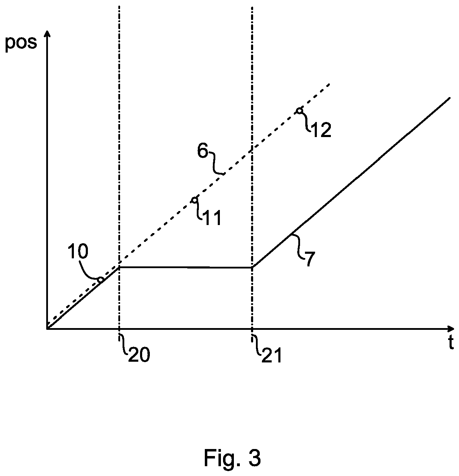

Fig 3 is a schematic diagram illustrating program execution of the robot of Fig 1, where there is an unhandled conveyor stoppage. At a time 20, the conveyor 3 stops, and the conveyor 3 starts moving again at a time 21. The stoppage between the times 20 and 21 is indicated by the fact that the solid conveyor line 7 is horizontal between these two times 20, 21. In other words, time passes without movement of the work object 2 on the conveyor. At the same time, the program flow, indicated by the dashed line 6, continues as if the work object 2 continues to move. This can result in kinematic limitations as a result of the limited work area 9.

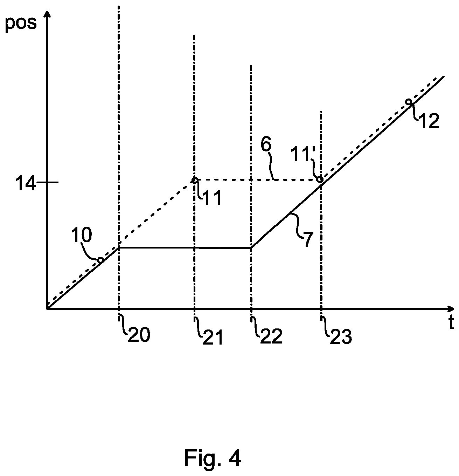

Fig 4 is a schematic diagram illustrating program execution of the robot of Fig 1, where there is a conveyor stoppage which is handled. As in Fig 3, there is a conveyor stoppage between times 20 and 22. Here, however, a controller of the robot 1 recognises the stoppage at some point after the stoppage at time 20, and suspends the program at time 21.

The deviation of the conveyor in relation to a nominal speed can for example be detected in any one or in any combination of any of the following three ways:
In the first alternative, there is digital signal indicating that the conveyor speed is below a threshold speed. In one embodiment, speeds below this threshold speed are considered zero.

In the second alternative, the actual conveyor position is compared with a reference conveyor position based on a time measurement from the beginning of the program multiplied by the nominal (expected) conveyor speed.

In the third alternative, the actual conveyor position is recorded in each programmed position by running the program with conveyor moving at correct, nominal, speed in a special "teach mode". The conveyor positions will then be included and saved along with the program. When the program subsequently runs in normal production, the recorded and actual position can be compared to determine if the conveyor is in its correct position

The nominal speed can be a configured speed, or can vary from program to program. Alternatively, the nominal speed is a speed of the conveyor which is measured at a time when the robot and conveyor are operating normally. Moreover, the nominal speed can be a speed which is the same for an entire production line of the entire plant, or it could be a speed which pertains only to a subset of the plant, such as only the production stage in question.

It is to be noted the conveyor may not come to a complete stop. The conveyor can also slow down, whereby the controller recognises the reduction in speed and acts the same way. The robot has a nominal, normal speed, whereby any deviation from this can be detected. The deviation can be considered to have occurred if the speed of the conveyor 3 deviates from the nominal speed by more than a predetermined percentage. Alternatively, the conveyor 3 is considered to have deviated from the nominal speed if an accumulated lag time of the conveyor exceeds a threshold lag time.

When the program is suspended, a waiting routine can be executed. In one instance the waiting routine is as simple as keeping the robot stationary, optionally preceded by moving the robot away from the work object 2.

It is to be noted that the position 14 in the program flow, corresponding to point 11, where the program flow is suspended, is not a pre-programmed waiting position. On the contrary, point 14 is a dynamically generated waiting position.

Each time the controller reads a position movement instruction in the movement program, it checks if it needs to wait for the conveyor. If this is true, the controller creates a waiting position based on the position included in the movement instruction. Consequently, each programmed position is a potential waiting position. Moreover, there may be situations where waiting positions would be created between already programmed positions. The function may be switched on and off anywhere in the program by a program instruction as inserted by a programmer. This allows the programmer to, for example, exclude the possibility of creating waiting positions in sensitive parts of the movement program where a waiting position would be detrimental to the result of the program.

In the prior art, waiting positions in the control program for the robot had to be pre-programmed, e.g. by manually entering waiting positions in the program or running one or more teaching runs of a control program of a robot to set the waiting position a certain points of the control program.

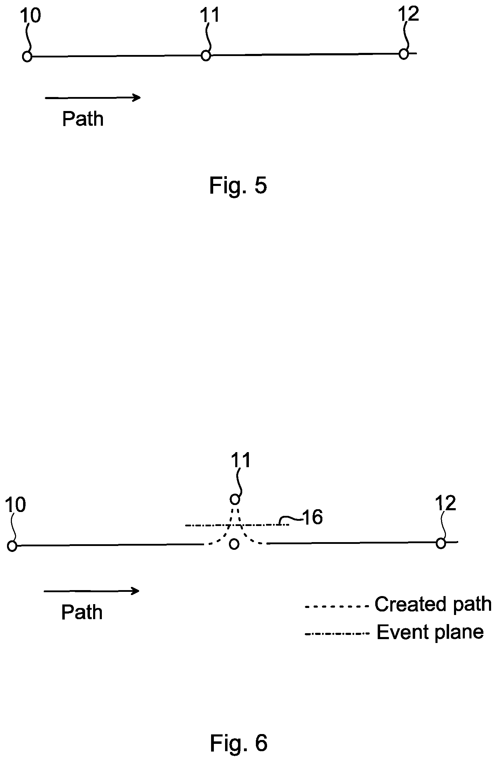

Moreover, with for example painting robots, these now often keep the paint applicator, such as a spray applicator, in use continually for long periods of time, known in the art as the StayOn principle. With the present embodiment, waiting positions can be created even in a position of the program where the applicator would be in use, reducing any ill-effects of stoppages. More details about this are disclosed in conjunction with Figs 5 and 6 below.

At time 22, the conveyor 3 starts again. At some point after the start, this is detected by the controller of the robot 1. At time 23, the conveyor 3 has caught up with the position 14 of the control program, whereby the program flow resumes at point 11'. The controller knows when to resume the program flow by measuring the time between 20 and 21, multiplying this time with the conveyor speed, and adding the resulting distance to the position 15 when the conveyor stopped. In other words, the controller calculates the position 14, and resumes when the conveyor is at, or approaches this position 14. After time 23, the conveyor 3 and the program flow are again synchronised.

It is to be noted that if the stoppage, indicated by the times 20 and 22 is very short, the stoppage is optionally disregarded. Nevertheless, if not compensated for with a suspension of the control program, the short stoppage will result in a discrepancy between the program flow 6 and the conveyor 7. An accumulation of several such relatively short stoppages can still result in the same issue as a long stoppage. Hence, in one embodiment, the stoppage is determined as a trigger for creating a waiting position if an accumulation of stoppages exceeds a threshold time. The accumulation is then calculated since the most recent previous waiting position correction, or since production start, if no waiting position has been created yet.

Fig 5 illustrates the path of a program flow of the robot in Fig 1. In this program flow there are no interruptions. The program runs without interruptions from point 10 to point 11 and finally to point 12, corresponding to points 10, 11 and 12 of Fig 2.

Fig 6 illustrates the path of a program flow of the robot in Fig 1 where there is an interruption. At some point prior to point 11, the controller of the robot detects that the conveyor has stopped. The controller then creates a waiting position at point 11.

Moreover, a virtual surface 16 is created. This virtual surface 16 is a geometric construction in space (i.e. not a physical surface), which is used to control a tool of the robot 1. For example, if the tool is a spray applicator for paint, the applicator is switched off when a part of the robot 1, e.g. the applicator, passes the virtual surface 16. Passing the virtual surface can for example be determined when any part of the applicator (or any other predetermined part of the industrial robot 1) passes the virtual surface 16, or when a specific point of the applicator (or any other predetermined part of the industrial robot 1) passes the surface 16. The robot then waits in position 11 until the controller determines that it is time to resume the program. When the same part of the robot as before, e.g. the applicator, passes the virtual surface (now in the opposite direction from before), the applicator is switched on. The virtual surface 16 is created some distance from the work object 2. This allows for a smooth transition from spraying paint to stopping the spraying, and similarly, a smooth transition when the paint spraying is resumed. This solves the problem which may arise if the paint spraying is stopped or resumed abruptly, resulting in undesired, and visible and/or tactile artefacts from the suspended painting. The virtual surface 16 can be of any suitable geometry, including, but not limited to, a plane, a partial spherical surface, any other curved surface or a virtual surface of any other suitable shape.

It is to be noted that it is not necessary to create a virtual surface to achieve this effect. As long as the spraying is stopped or resumed at a distance from the work object 2, the risk for visible artefacts from the suspended spraying is significantly reduced. For example, the spray applicator can be switched off when it reaches a certain distance from the work object, or the spray applicator can be switched off once the robot rests in its waiting position.

In another embodiment, a retracted position is created based on the programmed position, thereby moving the applicator out from the object. This will create a path outside the already programmed path.

Alternatively or additionally, the painting may be suspended/started after a time delay from the programmed position.

If a new path outside the already programmed path is not desired, the controller can create a virtual surface for suspending the painting along the path before the robot stopped. In this case the robot will reverse along the path until it reaches a position before the virtual surface where it waits for the conveyor and then uses the same virtual surface to start painting again.

The painting may also be suspended/started after a time delay from the programmed position

For all cases the paint/air flow may also be ramped down when suspending painting and ramped up again when starting. The ramping period may be adjustable.

It is to be noted that the method described above can be packaged as a software package for execution in a controller of a robot.

## Claims

1. A method for controlling a robot performing movements according to a control program, said method comprising the steps of:
effecting programmed actions of the robot (1), while at the same time being synchronised with a conveyor (3) for moving a work object (2) for said robot;
each time the controller reads a position movement instruction in the control program, determining if a speed of the conveyor (3) has deviated from a nominal speed;
when it is determined that said speed of said conveyor (3) has deviated, performing the additional steps of: creating a new waiting position (14) in said control program, wherein each position in the control program is a potential waiting position; effecting said waiting position (14) for said robot (1); and resuming said control program such that said control program continues when said work object (2) is at said new waiting position (14).

2. The method according to claim 1, wherein said step of effecting said waiting position (14) involves making said robot stationary.

3. The method according to claim 1, wherein said step of creating a new waiting position (14) involves creating a plurality of waiting positions, and
said step of effecting said waiting position involves effecting movement of said robot between said waiting positions.

4. The method according to any one of claims 1 to 3, wherein said determining that said speed of said conveyor (3) has deviated from a nominal speed involves determining that said conveyor has stopped.

5. The method according to any one of the previous claims, wherein
said step of effecting said waiting position (14) includes effecting movements of said robot (1) such that a predetermined part of said robot (1) is in a position corresponding to said waiting position (14), and
said step of resuming said control program includes effecting movements of said robot (1) such that said predetermined part of said robot (1) is in same position as prior to said step of effecting said waiting position (14).

6. The method according to any one of the previous claims, further comprising, after said step of determining and before said step of resuming, the step of:
suspending paint spraying performed by the robot (1) on said work object (2), and
wherein said step of resuming said control program involves resuming said paint spraying.

7. The method according to claim 6, wherein said step of suspending paint spraying is performed when a paint applicator of said robot has reached some distance from said work object.

8. The method according to claim 6 or 7, further comprising the steps of:
as a response to said determining that the speed of said conveyor has deviated from said nominal speed, creating a virtual surface;
as a response to a predetermined part of said robot passing said virtual surface in a first direction, suspending paint spraying; and
as a response to said predetermined part of said robot passing said virtual surface in a second direction, said second direction being opposite to said first direction, resuming said paint spraying.

9. The method according to any one of the previous claims, wherein said determining that the speed of said conveyor has deviated from said nominal speed involves determining that an accumulated lag time of said conveyor exceeds a threshold lag time.

10. A control system for a robot (1), said control system comprising a controller, wherein:
said controller is configured to effect programmed actions of the robot (1), while at the same time being synchronised with a conveyor (3) for moving a work object (2) for said robot;
said controller is configured to, each time the controller reads a position movement instruction in a control program, determine if a speed of the conveyor (3) has deviated from a nominal speed;
said controller is configured to, when it is determined that said speed of said conveyor (3) has deviated, create a new waiting position (14) in said control program, wherein each position in the control program is a potential waiting position; effect said waiting position (14) for said robot; and resume said control program such that said control program continues when said work object (2) is at said new waiting position (14).

11. A robot comprising a control system according to claim 10.

12. The robot according to claim 11, wherein said robot is a paint robot.

13. A computer program product including software code, which, when executed in a controller of a robot, performs the method according to any one of claims 1 to 9.

## Patentansprüche

1. Verfahren zum Steuern eines Roboters, der Bewegungen ausführt, gemäß einem Steuerprogramm, wobei das Verfahren die folgenden Schritte umfasst:
Herbeiführen von programmierten Handlungen des Roboters (1), während er zur selben Zeit mit einem Förderband (3) zum Bewegen eines Arbeitsobjekts (2) für den Roboter synchronisiert ist;
jedes Mal dann, wenn die Steuereinheit eine Positionsbewegungsanweisung in dem Steuerprogramm liest, Bestimmen, ob eine Geschwindigkeit des Förderbands (3) von einer Nenngeschwindigkeit abgewichen ist;
wenn bestimmt wird, dass die Geschwindigkeit des Förderbands (3) abgewichen ist, Ausführen der folgenden zusätzlichen Schritte: Erzeugen einer neuen Warteposition (14) in dem Steuerprogramm, wobei jede Position in dem Steuerprogramm eine potenzielle Warteposition ist; Herbeiführen der Warteposition (14) für den Roboter (1); und Fortsetzen des Steuerprogramms derart, dass das Steuerprogramm fortfährt, wenn das Arbeitsobjekt (2) an der neuen Warteposition (14) ist.

2. Verfahren nach Anspruch 1, wobei der Schritt des Herbeiführens der Warteposition (14) beinhaltet, den Roboter stationär zu machen.

3. Verfahren nach Anspruch 1, wobei der Schritt des Erzeugens einer neuen Warteposition (14) beinhaltet, mehrere Wartepositionen zu erzeugen, und
der Schritt des Herbeiführens der Warteposition beinhaltet, eine Bewegung des Roboters zwischen Wartepositionen herbeizuführen.

4. Verfahren nach einem der Ansprüche 1 bis 3, wobei das Bestimmen, dass die Geschwindigkeit des Förderbands (3) von einer Nenngeschwindigkeit abgewichen ist, beinhaltet, zu bestimmen, dass das Förderband angehalten hat.

5. Verfahren nach einem der vorhergehenden Ansprüche, wobei
der Schritt des Herbeiführens der Warteposition (14) enthält, Bewegungen des Roboters (1) derart herbeizuführen, dass ein vorgegebener Teil des Roboters (1) in einer Position ist, die der Warteposition (14) entspricht, und
der Schritt des Fortsetzens des Steuerprogramms enthält, Bewegungen des Roboters (1) derart herbeizuführen, dass der vorgegebene Teil des Roboters (1) in derselben Position wie vor dem Schritt des Herbeiführens der Warteposition (14) ist.

6. Verfahren nach einem der vorhergehenden Ansprüche, das ferner nach dem Schritt des Bestimmens und vor dem Schritt des Fortsetzens den folgenden Schritt umfasst:
Aussetzen eines Farbspritzverfahrens, das durch den Roboter (1) an dem Arbeitsobjekt (2) ausgeführt wird, und
wobei der Schritt des Fortsetzens des Steuerprogramms beinhaltet, das Farbspritzverfahren fortzusetzen.

7. Verfahren nach Anspruch 6, wobei der Schritt des Aussetzens des Farbspritzverfahrens ausgeführt wird, wenn ein Farbapplikator des Roboters einen gewissen Abstand von dem Arbeitsobjekt erreicht hat.

8. Verfahren nach Anspruch 6 oder 7, das ferner die folgenden Schritte umfasst:
als eine Reaktion auf das Bestimmen, dass die Geschwindigkeit des Förderbands von der Nenngeschwindigkeit abgewichen ist, Erzeugen einer virtuellen Fläche;
als eine Reaktion darauf, dass ein vorgegebener Teil des Roboters die virtuelle Fläche in eine erste Richtung überschreitet, Aussetzen des Farbspritzverfahrens; und
als eine Reaktion darauf, dass der vorgegebene Teil des Roboters die virtuelle Fläche in einer zweiten Richtung überschreitet, wobei die zweite Richtung entgegengesetzt zu der ersten Richtung ist, Aussetzen des Farbspritzverfahrens.

9. Verfahren nach einem der vorhergehenden Ansprüche, wobei das Bestimmen, dass die Geschwindigkeit des Förderbands von der Nenngeschwindigkeit abgewichen ist, beinhaltet, zu bestimmen, dass eine akkumulierte Verzögerungszeit des Förderbands eine Schwellenverzögerungszeit übersteigt.

10. Steuersystem für einen Roboter (1), wobei das Steuersystem eine Steuereinheit umfasst, wobei:
die Steuereinheit konfiguriert ist, programmierte Handlungen des Roboters (1) herbeizuführen, während er zur selben Zeit mit einem Förderband (3) zum Bewegen eines Arbeitsobjekts (2) für den Roboter synchronisiert ist;
wobei die Steuereinheit konfiguriert ist, jedes Mal dann, wenn die Steuereinheit eine Positionsbewegungsanweisung in einem Steuerprogramm liest, zu bestimmen, ob eine Geschwindigkeit des Förderbands (3) von einer Nenngeschwindigkeit abgewichen ist;
wobei die Steuereinheit konfiguriert ist, dann, wenn bestimmt wird, dass die Geschwindigkeit des Förderbands (3) abgewichen ist, eine neue Warteposition (14) in dem Steuerprogramm zu erzeugen, wobei jede Position in dem Steuerprogramm eine potenzielle Warteposition ist; die Warteposition (14) für den Roboter herbeizuführen; und das Steuerprogramm derart fortzusetzen, dass das Steuerprogramm fortfährt, wenn das Arbeitsobjekt (2) an der neuen Warteposition (14) ist.

11. Roboter, der ein Steuersystem nach Anspruch 10 umfasst.

12. Roboter nach Anspruch 11, wobei der Roboter ein Anstrichroboter ist.

13. Computerprogrammprodukt, das Softwarecode enthält, der dann, wenn er in einer Steuereinheit eines Roboters ausgeführt wird, das Verfahren nach einem der Ansprüche 1 bis 9 ausführt.

## Revendications

1. Procédé de commande d'un robot qui exécute des déplacements selon un programme de commande, ledit procédé comportant les étapes qui consistent à :
activer des actions programmées du robot (1) tout en le synchronisant avec un transporteur (3) qui déplace l'objet de travail (2) pour ledit robot,
chaque fois que la commande lit dans le programme de commande une instruction de déplacement de positionnement, déterminer si la vitesse du transporteur (3) s'est écartée d'une vitesse nominale,
s'il s'avère que ladite vitesse dudit transporteur (3) s'est écartée, exécuter les étapes supplémentaires qui consistent à : créer une nouvelle position d'attente (14) dans ledit programme de commande, chaque position inscrite dans le programme de commande étant une position d'attente potentielle, activer ladite position d'attente (14) pour ledit robot (1) et reprendre ledit programme de commande de telle sorte que ledit programme de commande se poursuive lorsque ledit objet de travail (2) se trouve en ladite nouvelle position d'attente (14).

2. Procédé selon la revendication 1, dans lequel ladite étape d'activation de ladite position d'attente (14) recourt à la mise dudit robot en position stationnaire.

3. Procédé selon la revendication 1, dans lequel ladite étape de création d'une nouvelle position d'attente (14) recourt à la création de plusieurs positions d'attente et dans lequel ladite étape d'activation de ladite position d'attente recourt à l'activation du déplacement dudit robot entre lesdites positions d'attente.

4. Procédé selon l'une quelconque des revendications 1 à 3, dans lequel ladite étape de détermination que ladite vitesse dudit transporteur (3) s'est écartée d'une vitesse nominale comprend la détermination que ledit transporteur s'est arrêté.

5. Procédé selon l'une quelconque des revendications précédentes, dans lequel ladite étape d'activation de la position d'attente (14) comprend l'activation de déplacement dudit robot (1) de telle sorte qu'une partie prédéterminée dudit robot (1) se trouve en une position qui correspond à ladite position d'attente (14) et ladite étape de reprise dudit programme de commande comprend l'activation de déplacement dudit robot (1) de telle sorte que ladite partie prédéterminée dudit robot (1) se trouve dans la même position qu'avant ladite étape d'activation de ladite position d'attente (14).

6. Procédé selon l'une quelconque des revendications précédentes, comprenant en outre après ladite étape de détermination et avant ladite étape de reprise l'étape qui consiste à interrompre la pulvérisation de peinture réalisée par le robot (1) sur ledit objet de travail (2), ladite étape de reprise dudit programme de commande comprenant la reprise de ladite étape de peinture.

7. Procédé selon la revendication 6, dans lequel ladite étape d'interruption de ladite pulvérisation de peinture est réalisée lorsqu'un applicateur de peinture dudit robot a atteint une certaine distance par rapport audit objet de travail.

8. Procédé selon les revendications 6 ou 7, comprenant en outre les étapes qui consistent à, en réponse à ladite étape de détermination que la vitesse dudit transporteur s'est écartée de ladite vitesse nominale, créer une surface virtuelle et en réponse au fait qu'une partie prédéterminée dudit robot est passée devant ladite surface virtuelle dans une première direction, interrompre la pulvérisation de peinture et, en réponse au fait que ladite partie prédéterminée dudit robot est passée devant ladite surface virtuelle dans une deuxième direction, ladite deuxième direction étant opposée à ladite première direction, reprendre ladite pulvérisation de peinture.

9. Procédé selon l'une quelconque des revendications précédentes, dans lequel ladite étape de détermination que la vitesse dudit transporteur s'est écartée de ladite vitesse nominale comprend l'étape de détermination qu'une durée cumulée d'interruption dudit transporteur dépasse un seuil de durée d'interruption.

10. Système de commande pour un robot (1), ledit système de commande comprenant une commande et dans lequel :
ladite commande est configurée pour activer des actions programmées du robot (1) tout en synchronisant ce dernier avec un transporteur (3) qui déplacer un objet de travail (2) pour ledit robot,
ladite commande est configurée pour, chaque fois que la commande lit une instruction de déplacement de positionnement dans un programme de commande, déterminer si la vitesse du transporteur (3) s'est écartée d'une vitesse nominale,
ladite commande est configurée pour, s'il s'avère que ladite vitesse dudit transporteur (3) s'est écartée, créer une nouvelle position d'attente (14) dans ledit programme de commande, chaque position inscrite dans le programme de commande étant une position d'attente potentielle, activer ladite position d'attente (14) pour ledit robot et reprendre ledit programme de commande de telle sorte que ledit programme de commande se poursuive lorsque ledit objet de travail (2) se trouve en ladite nouvelle position d'attente (14).

11. Robot comprenant un système de commande selon la revendication 10.

12. Robot selon la revendication 11, dans lequel ledit robot est un robot de peinture.

13. Produit de programme informatique comprenant un code logiciel qui, lorsqu'il est exécuté dans la commande d'un robot, met en oeuvre le procédé selon l'une quelconque des revendications 1 à 9.
